Europäisches Patentamt

(19) European Patent Office

Office européen des brevets

(11) Publication number: **0 148 142**
**A2**

(12) # EUROPEAN PATENT APPLICATION

(21) Application number: **84850386.8**

(22) Date of filing: **12.12.84**

(51) Int. Cl.⁴: **G 01 S 5/18**
**G 01 S 11/00**

(30) Priority: **16.12.83 SE 8306993**

(43) Date of publication of application:
**10.07.85 Bulletin 85/28**

(84) Designated Contracting States:
**AT CH DE IT LI SE**

(71) Applicant: **Geodynamik H Thurner AB**
**Regeringsgatan 111**
**S-111 39 Stockholm(SE)**

(72) Inventor: **Sandström, Ake**
**Flisbacken 37**
**S-191 51 Sollentuna(SV)**

(74) Representative: **Bergvall, Sven et al,**
**Bergenstrahle & Lindvall AB Sankt Paulsgatan 1**
**S-116 47 Stockholm(SE)**

(54) System for localizing the source of a ground impact wave.

(57) The invention relates to a system for localizing a ground impact wave source, including at least three sensors (11-22) which are sensitive to impact waves generated in the ground, there being means (3-7) arranged for calculating the position of the impact wave source from impact wave information received by the sensors. In accordance with the invention the sensors are placed conventionally under the ground surface, and means (24-28) for calculating the position of the impact wave source include means for detecting the characteristics of the impact waves. Calculating circuits are arranged for comparing the impact wave characteristics received by each sensor with a theoretical model for these characteristics stored in a memory (6), the calculation circuits also including means for calculating the deviation between the measured characteristics and the stored characteristics starting from an assumed position for the impact wave source. The deviation is caused to assume successively decreasing values by stepwise transfer of the assumed position of the impact wave source, which for a minimum value of the deviation will substantially coincide with the actual position of the impact wave source.

0148142

The present invention relates to a system for localizing the source of a wave caused by impact against the ground, including at least three sensors which are sensitive to waves generated by impact against the ground, and hereinafter called impact waves, there being means arranged for calculating the position of the impact wave source from information on the impact wave received from the sensors. The system is particularly suitable for registering the touch-down point for ski jumpers.

Previously known methods of calculating the touch-down of a jumper on a ski jump are based on detecting the position of the jumper on the ski jump with the aid of electric coils or serpentines or radio transmitters under the snow and on the skis or boots of the jumper. Pressure transducers between boot and ski have also been proposed. Other methods are based on optical sensing of the ski jumper's position, possibly in combination with acoustic or seismic methods of detecting the touch-down point. A purely acoustic sensing system is described in FR-PS 2 413 634.

A system for detecting the touch-down of a projectile is described in US-PS 4 305 142, where a plurality of sensors are placed in the ground and the time differences between the arrival times of the impact waves to the sensors are determined. Since the origin of points for which the difference between the distance to two fixed points is constant, it is necessary to measure the time differences between at least three transducers, thus obtaining two time differences which form two hyperbolic curves cutting each other in one, or in certain cases two, points. With this method a wide signal bandwidth must normally be used to enable sufficient time resolution to be obtained. This causes some problems in localizing the source of an impact wave. One of these problems is that data collection must take place at high sampling frequency if the signals are to be processed in a data processor. The propagation rate for vibration waves is in the order of magnitude of 500 m/s, and thus the time resolution must be at least 1 ms for the error in jump length to be less than 0.5 m. Just before the jumper lands on the slope there is a so-called "scraping" by the tails of the skis, which can give signal levels that are sufficiently high within the frequency range used for disturbing the calculation of the position of the proper touch-down. This will definitely occur if scraping takes place directly above one or more transducers in a row. Different jumpers land in different ways, and the difference between different jumps for the same jumper is also large. In certain cases, high-frequency signals with high amplitude are generated, which are favourable with regard to calculation of arrival times. In other cases the energy content at high frequencies is too low to enable calculation of arrival times with the desired accuracy. The difference depends primarily on the way the skis are let down. When this is done rapidly there is generated an impulse of short duration and high amplitude caused by the rapid retardation of the ski's mass. The jumper's mass only participates to a minor degree at the beginning of this sequence. The impulse from retardation of the jumper's mass takes place during a longer time and therefore gives rise to vibrations of lower frequency which have a long rising time and are therefore less suitable for accurate determination of the arrival time. By "retardation" is intended here retardation in a direction at right angles to the snow surface.

The present invention generally relates to a system for localizing an impact wave source where the above-mentioned disadvantages with already known system have been eliminated, and where individual variations in the impact impulse itself have also been circumvented. In applying the system for registering the touch-down in ski jumping, the effect of the waves generated by scraping of the ski tails is also avoided.

The system according to the invention is characterized essentially in that the sensors are placed under the ground surface in a manner known per se, and that means for calculating the position of the impact wave source include means for detecting the characteristic of the impact wave, and in that calculation circuits are arranged for comparing the impact wave characteristics received by each sensor with values for these characteristics stored in a memory. The calculation circuits also include means for calculating deviations between the measured characteristics and the stored characteristics, starting from an assumed position of the impact wave source, the deviation being caused to assume successively decreasing values by stepwise transfer of the assumed position of the impact wave source. This assumed position will substantially coincide with the position of the actual touch-down point at the minimum value of the deviation.

According to a suitable embodiment of the invention for registering the touch-down in ski jumping, there are only utilized the waves generated during the first part of the retardation of the jumper's body mass in a direction at right-angles to the surface of the slope against which touch-down has been made. In comparison with scraping and other types of rapid ski let-down against the substructure, the force impulse which is transmitted to the substructure during this phase of the touch-down has long duration and primarily gives rise to surface waves of comparatively low frequency. Such waves are generated to a very minor degree by the tails of the skis scraping against the substructure.

An embodiment of the invention selected as an example is described in detail below with reference to the accompanying drawings, on which

Fig. 1 illustrates the location of sensors connected to a system for registering touch-down in ski jumping in accordance with the invention,

Fig. 2 illustrates the appearance of the impact waves in three different sensors,

Fig. 3 is a block diagram of the principle implementation of the system in accordance with the invention,

Fig. 4 is a block diagram of the signal processing in the system in accordance with the invention,

Fig. 5 is a mathematical model in a space coordinate system of a calculation method in accordance with the invention, where a calculation parameter for the sensors lies on the swept surface of a cone with the touch-down point situated at the vertex of the cone,

Fig. 6 illustrates the projection in the x,y-plane for the sensor location according to Fig. 4,

Fig. 7 illustrates a coordinate system with energy and its inverse function as a function of the distance from the impact wave source,

Fig. 8 is an analytical scheme for a calculation method in accordance with the invention.

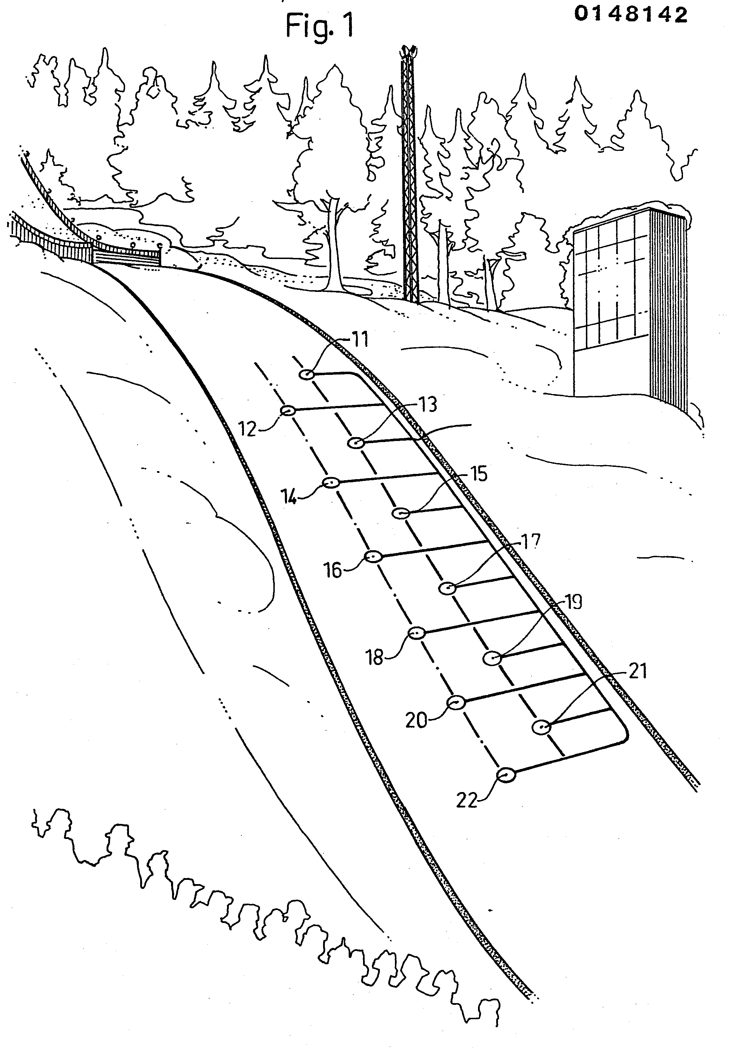

As will be seen from Fig. 1, sensors 11-22 are placed zigzag in the slope of a ski jump and are connected to a system in accordance with the invention. The sensors are placed under the touch-down area of the slope, i.e. they may lie in or under the snow covering and they primarily receive surface waves of comparatively low frequency. On touch-down, elastic waves are generated in the snow covering and underlying layers. The waves propagate themselves laterally and even downwardly, i.e. at right angles to the surface. The sensors can suitably have the form of small boxes, in each box there being a vibration transducer, e.g. an accelerometer, which is mainly only sensitive to the movement of the box at right angles to its top and bottom parallel planes. Each sensor is placed in the slope such that the bottom and top surfaces of the box will be parallel to the surface of the slope nearest above the respective sensor. The sensors will thus mainly be sensitive only to the component of the oscillating movement in the slope which is at right angles to the surface. Tri-axial sensors can also be envisaged for obtaining a more complete characterization of the oscillating movement.

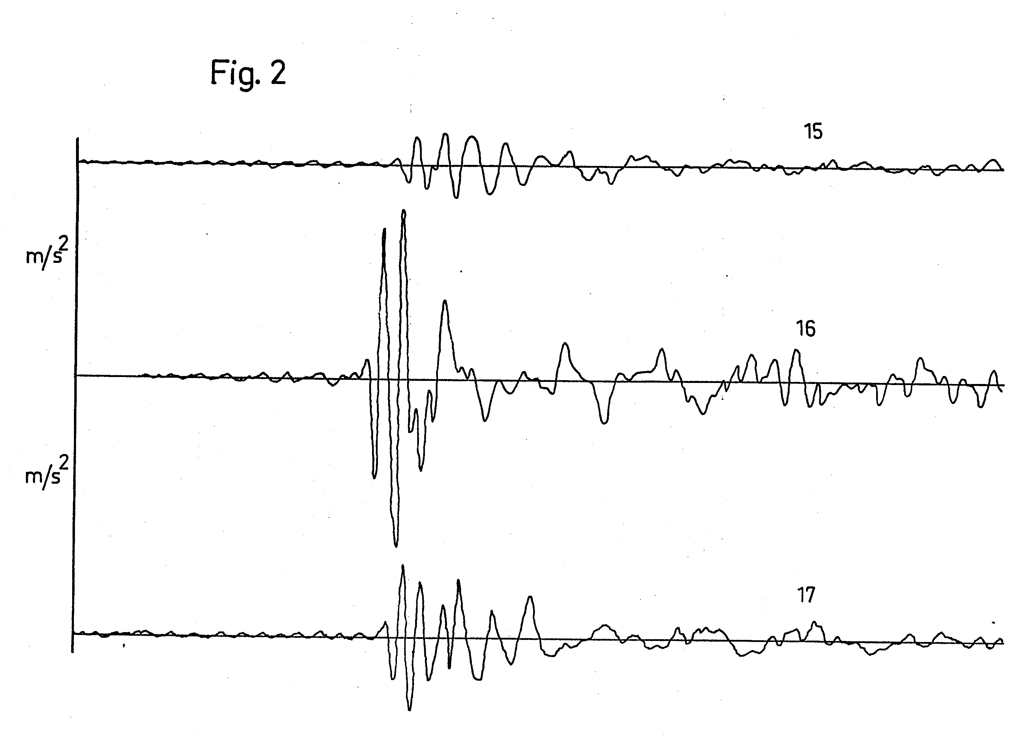

Fig. 2 illustrates examples of signals from three sensors in connection with a touch-down. The amplitude of the signals is plotted as a function of the time t. It will be seen that the amplitudes are different and that their occurrance in time, i.e. the time sequence, differs somewhat. In accordance with the invention the characteristics of the signals are registered, these being such as arrival time, energy, amplitude, rising time, phase position etc.

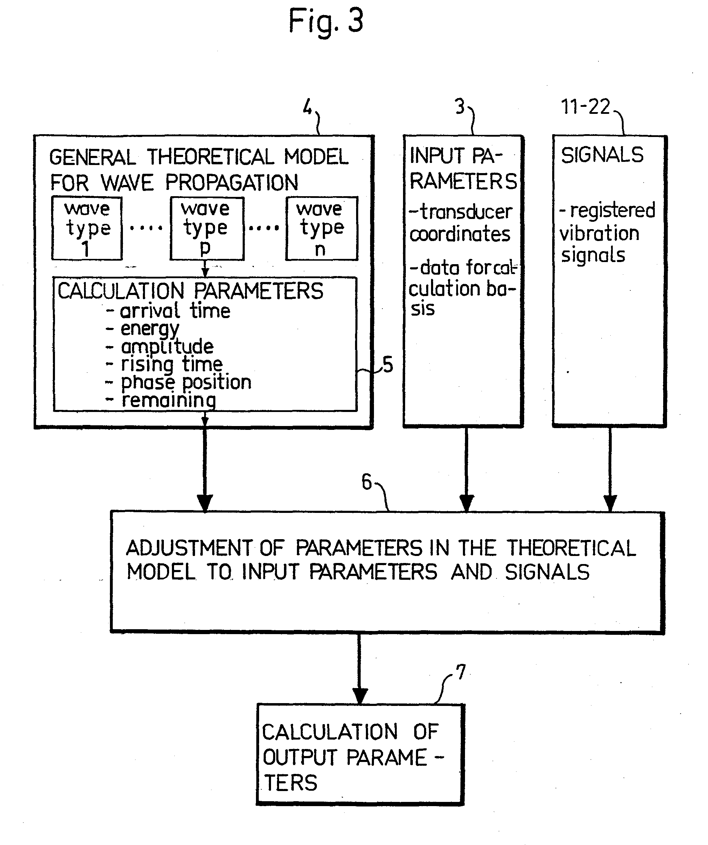

The block diagram of Fig. 3 illustrates a general method of calculating desired output parameters with the aid of a theoretical model over the propagation of waves in an elastic substructure and known or estimated values of input parameters as well as measured vibration signals in the elastic substructure. In the case in question the desired output parameters are the coordinates for the jumper's toch-down point.

A general theoretical model for wave propagation can be principly expressed mathematically in the form of a system of differential equations with associated marginal conditions. The general model can be simplified by division into a plurality of partial models according to block 4 in Fig. 3. In the Figure there is illustrated a division into two levels relating to a number of different wave types and also to parameters characteristic for each wave type. In block 6 in Fig. 3 there is an adjustment of the theoretical model (or a partial model thereof) to input parameters from block 3, and also to registered signals from a plurality of sensors 11-22. When an adjustment between model and input parameters and signals has been arrived at, the values of the calculation parameters in the theoretical model have also been determined. With the aid of these values desired output parameters are then calculated in block 7, these being the coordinates of the touch-down point in the case in question.

Hereinafter is a description of a preferred method of calculating the coordinates for a ski jumper's touch-down point with a special partial model and a matching algorithm.

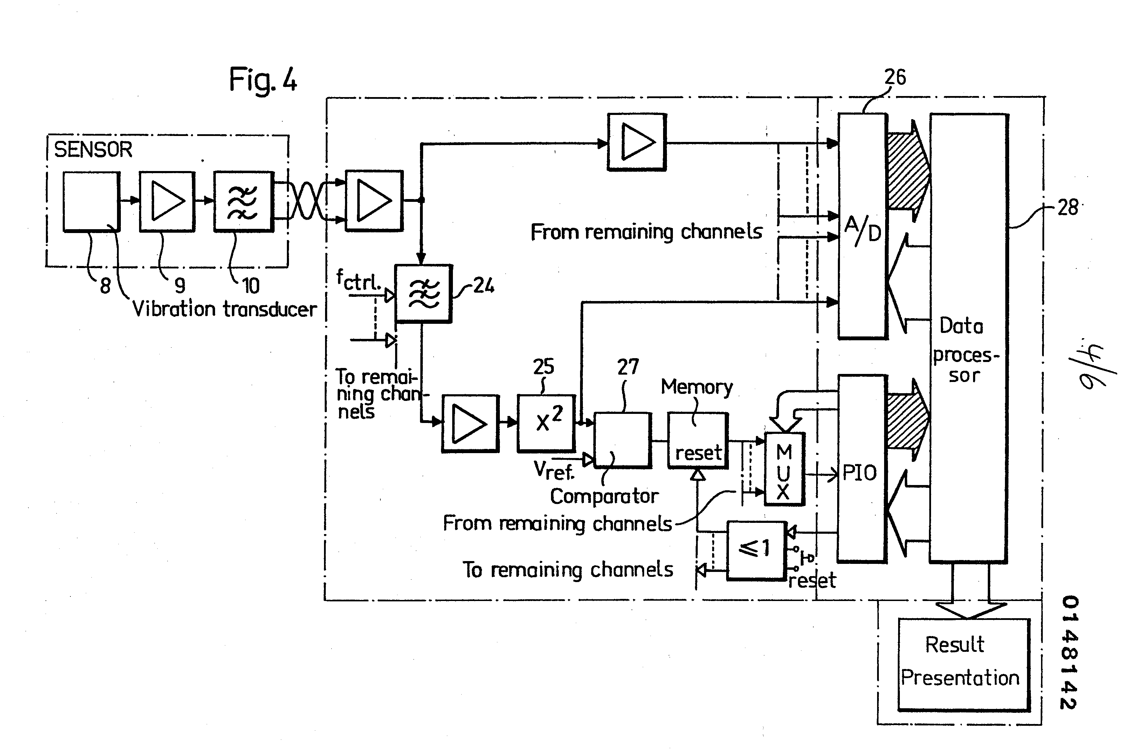

As apparent from the system block scheme according to Fig. 4, each sensor contains a vibration transducer 8, an amplifier 9 and a filter 10. The signal is transmitted from the sensor to a circuit 23 for analogue signal processing, where the task is to accentuate the pulse of the vibration signals stemming from the low-frequency surface waves which are to be utilized, while waves characteristic for scraping are attenuated. This may take place by filtering the signals in the bandpass filter 24, providing that the typical frequencies for the respective wave time are sufficiently

0148142

separated. According to another method, sensors may be used which have a resonance within the desired frequency range, i.e. utilization of mechanical bandpass filtering. Normal electrical filtration of the signals should be preferable, since it is desired to retain the possibility of varying the limiting frequencies of the filters to adjust the analysis to varying elastic properties of the substructure. The filtered signals are amplified and squared in a squaring unit 25 and digitalized in an analogue-digital converter 26, the converted signal being taken to a data processor. The squared signal is also applied to a comparator 27 and compared with a reference voltage $V_{ref}$. The time when the level exceeds the reference voltage is detected for the different sensors. An algorithm in a subsequent computer 28 decides with the aid of these times which time section of the signals shall be stored in the computer memory for further analysis.

The digital signal processing is performed such that the energy for the five greatest signals, all of which have their maximi within a given time window, is calculated as the sum of the signal squares registered during a given time interval. The five energy values calculated thus are subsequently adjusted to a theoretical model of how the wave packet of the type in question propagates itself from an impact wave source. As a first approximation the source is assumed to be a dot.

The attenuation of the amplitude with distance is assumed to depend to a major extent on geometric attenuation. The energy as a function of the distance may be written:

$$W_i = W_o \cdot r_i^{-\alpha} \qquad (I)$$

where

r = distance from the impact wave source,

$W_o$ = reference level, and

$\alpha$ = exponent which expresses to what degree the energy follows the surface.

The energies according to equation (I) can be formed to other magnitudes which increase linearly with the distance r and can be expressed by the equation:

$$U_i = (W_i)^{-1/\alpha} \qquad (II)$$

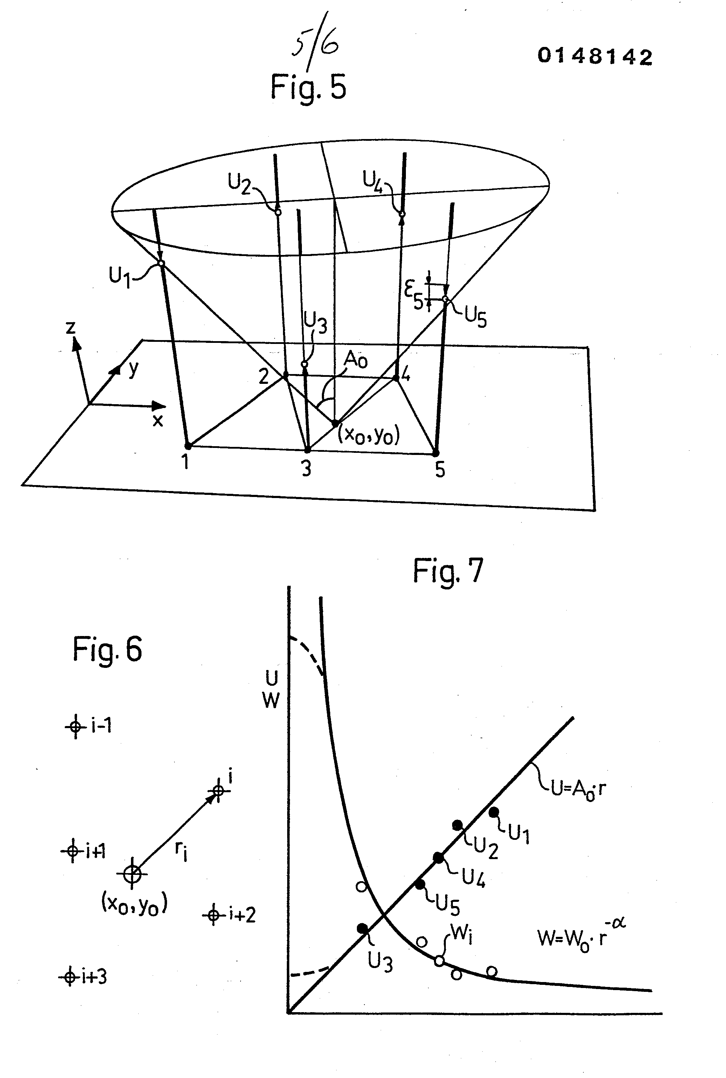

The appearance of the curves is apparent from Fig. 7.

If there are no measuring errors or deviations from theory, the magnitudes $U_i$ will all lie on a conical sweep, if they are plotted at right angles to the snow surface at the respective sensor (see Fig. 5). In practice deviations do occur, however, and it is necessary to define a cone which will satisfy the measured values as far as possible, e.g. so that the sum of the squares of the deviations will be at a minimum. The vertex of the cone is placed at the point $x_0/y_0$ in the plane which substantially agrees with the positions of the transducers, the vertex angle being equal to $A_0$.

The measured values which have the greatest amplitude, i.e. the least value of the function U, should be given the greatest weight since they lie closest to the touch-down point. It is therefore reasonable to use the following error function:

$$E = \sum \left( \frac{\varepsilon_i}{U_i} \right)^2 \qquad (III)$$

where

$$\varepsilon_i = A_0 \left[ (x_i - x_0)^2 + (y_i - y_0)^2 \right]^{\frac{1}{2}} - U_i$$

If the expression $\varepsilon_i$ is inserted in equation (III), the following expression is obtained:

$$E = \sum_{i=1}^{5} \left[ \frac{A_0}{U_i} \left( (x_i - x_0)^2 + (y_i - y_0)^2 \right)^{1/2} - 1 \right]^2 \qquad (IV)$$

Calculation of the point $x_0 y_0$, i.e. the position of the vertex of the cone takes place iteratively. A suitable starting value is applied, e.g:

$$x_0' = \frac{\sum \frac{x_i}{U_i}}{\sum \frac{1}{U_i}} \qquad y_0' = \frac{\sum \frac{y_i}{U_i}}{\sum \frac{1}{U_i}} \qquad (V)$$

0148142

The vertex of the cone is moved stepwise in a direction which gives the greatest alteration in the error function E. This direction is determined with the aid of calculated values of the respective $\frac{\partial E}{\partial x}$ ; $\frac{\partial E}{\partial y}$ in each step.

The magnitude $A_0$ which corresponds to the vertex angle of the cone, is calculated at each step by the iteration as the function:

$$A_0 = \sum u_i \Big/ \big[ (x_i - x_0)^2 + (y_i - y_0)^2 \big]^{1/2} \quad \text{(VI)}$$

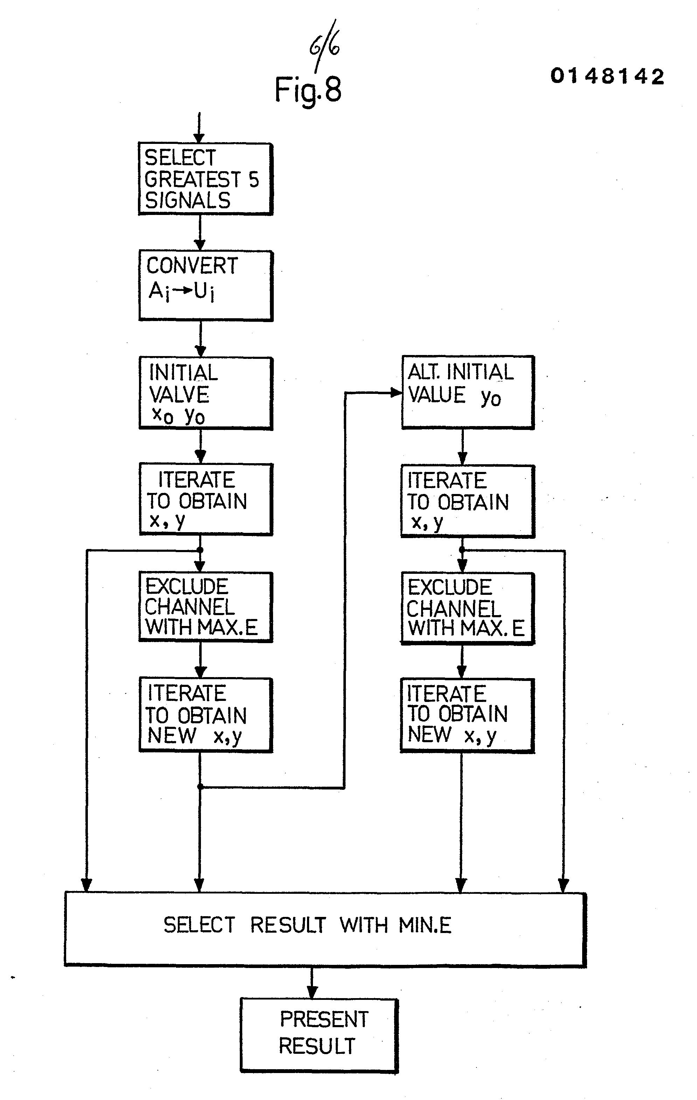

In certain cases there is more than one local minimum for E. For example, if the touch-down point is to one side of the two rows of sensors, there will be another minimum in the sensor group, apart from the correct minimum. With the starting values of $X_0$, $y_0$, according to the above it will be this incorrect minimum which is found first. The problem here is solved so that a new step calculation is carried out with a new starting value for $y_0$, which is at a suitable distance to one side of the sensor group and on the same side as the least $U_i$. A new iteration calculation is carried out and the result selected which gives the least value of the error E. (See analysis scheme according to Fig. 8.)

For reducing the risk of error due to a large deviation in amplitude for a sensor signal, the sensor is excluded which has the greatest deviation. A new calculation with the four remaining sensors is then carried out with the value $x_0$, $y_0$, calculated from five transducers, as the starting coordinate. It is also possible to replace the excluded sensor with the one of both adjacent transducers having the signal of greatest amplitude.

It is apparent from Fig. 5 that the vector $r_i$ is the projected distance to the touch-down point.

The preferred method of analyzing the filtered surface waves is based on a model of how energy in a surface wave packet generated by a ski jumper's touch-down propagates itself. The energy spreads itself substantially concentrically over the surface, but also penetrates successively. down to greater and greater depths. The amplitudes registered in sensors at different distances from the touch-down point therefore attenuate in a regular way with the distance from the point of excitation. There is also a partial loss in energy due to internal attenuation in the snow layer and underlying layers. The main attenuation of energy with increasing distance from the touch-down point takes place, however, due to the geometrical spread of energy over an ever-increasing volume.

## Claims

1. System for localizing the source of a ground impact wave, including at least three sensors which are sensitive to impact waves generated in the ground, there being means arranged for calculating the position of the impact wave source from the impact wave information received by the sensors, characterized in that the sensors are placed under the ground surface in a manner known per se, and that the means for calculating the position of the impact wave source include means for detecting the characteristics of the impact wave, and that calculation circuits are arranged for comparing the impact wave characteristics received by each sensor with a theoretical model for these characteristics stored in a memory, the calculation circuits including means for calculating the deviation between the measured characteristics and the stored characteristics starting from an assumed position of the impact wave source, the deviation being caused to assume successively decreasing value by stepwise transfer of the assumed position of the impact wave source, this position substantially coinciding with the actual position of the impact wave source for the minimum value of the deviation.

2. System as claimed in claim 1, characterized in that the impact wave characteristics sensed by the sensors is a direct function of the impact wave energy at the point of impact.

3. System as claimed in claims 1 and 2, characterized in that means are arranged for selecting a given number of signals with maximi within a given time interval, there being circuits arranged for calculating the energy values for the given number of sensors, as well as adjustment to these values of a theoretical model for the propagation of an impact wave from an impact wave source having an assumed position, where each of the calculated energy values will be a function $W_i = W_o \cdot r_i^{-\alpha}$ of the distance to the impact wave source, where $r_i$ = the distance from the impact wave source, $W_o$ = the reference level, $\alpha$ = an energy propagation factor, and in that means are arranged for calculating the function values $U_i = (W_i)^{-1/\alpha}$ which is directly proportional to the distance $r_i$ to the impact wave source, and that calculating means are arranged to form for an assumed position of the impact wave source deviations between each distance $r_i$ multiplied by a constant for each of the sensors and corresponding functional value $U_i$ and by successive systematic transfer of the assumed position for the impact wave source to find a minimum value for the sum of

0148142

the squares of the deviations, the transfer taking place in a direction which gives a maximum for the change in the sum of the squares of the deviations.

Fig. 1

0148142

Fig. 2

m/s²

m/s²

15

16

17

2/6

0148142

0148142

## Fig. 3

GENERAL THEORETICAL MODEL FOR WAVE PROPAGATION

| wave type 1 | .... | wave type p | .... | wave type n |

CALCULATION PARAMETERS
- arrival time
- energy
- amplitude
- rising time
- phase position
- remaining

INPUT PARAMETERS
- transducer coordinates
- data for calculation basis

SIGNALS
- registered vibration signals

ADJUSTMENT OF PARAMETERS IN THE THEORETICAL MODEL TO INPUT PARAMETERS AND SIGNALS

CALCULATION OF OUTPUT PARAMETERS

Fig. 4

SENSOR

Vibration transducer

8
9
10

f ctrl.

24

To remaining channels

25 $x^2$

Vref.
Comparator

27

Memory
reset

$\leq 1$
reset

M U X

PIO

A/D

26

From remaining channels

From remaining channels

To remaining channels

Data proces-sor

28

Result Presentation

Fig. 5

Fig. 7

Fig. 6

$U = A_0 \cdot r$

$W = W_0 \cdot r^{-\alpha}$

## Fig.8